# EUROPÄISCHE PATENTSCHRIFT

(11) **EP 0 695 619 B1**
(45) Veröffentlichungstag und Bekanntmachung des Hinweises auf die Patenterteilung: **31.03.1999**
(21) Anmeldenummer: 95108865.7
(22) Anmeldetag: 08.06.1995
(51) Int. Cl.: B29C 45/33

(54) **Spritzwerkzeug**
Injection mould
Moule d'injection

(30) Priorität: 28.07.1994 DE 9412201 U
(43) Veröffentlichungstag der Anmeldung: 07.02.1996
(73) Patentinhaber: Strack Norma GmbH, D-42117 Wuppertal (DE)
(72) Erfinder: Geyer, Rolf, D-58511 Lüdenscheid (DE)
(74) Vertreter: Eichler, Peter, Dipl.-Ing.

(56) Entgegenhaltungen:
- US-A- 3 932 085
- US-A- 4 765 585
- US-A- 5 397 226
- PATENT ABSTRACTS OF JAPAN vol. 17 no. 365 (M-1442) ,9.Juli 1993 & JP-A-05 057731 (MATSUSHITA ELECTRIC IND CO LTD) 9.März 1993,
- PATENT ABSTRACTS OF JAPAN vol. 13 no. 67 (M-798) [3415] ,15.Februar 1989 & JP-A-63 270114 (HITACHI LIGHTING LTD) 8.November 1988,

## Beschreibung

Die Erfindung bezieht sich auf ein Spritzwerkzeug, mit einem quer zur Längsachse des Werkzeuges verstellbaren Formschieber, der von einem an einer ersten Formplatte der einen Werkzeughälfte festgelegten Führungskörper geführt ist, und mit einem in den Formschieber eingreifenden Schrägteil, das an einem an einer zweiten Formplatte der anderen Werkzeughälfte befestigten Aufspannkörper vorhanden ist

Spritzwerkzeuge werden zur Herstellung von Spritzgußteilen aus Kunststoff oder aus Metall eingesetzt. Die Formgestaltung der Spritzgußteile kann es erforderlich machen, Formschieber zu verwenden, die seitlich von außen in die Form hinein und aus der Form heraus bewegt werden müssen, z.B. bei der Herstellung von Löchern. Die Bewegung der Schieber quer zur Längsachse des Werkzeugs erfolgt bei einem allgemein bekannten Spritzwerkzeug mit den eingangs genannten Merkmalen durch das Schrägteil, welches als schräg angeordneter Bolzen kreisförmigen Querschnitts ausgebildet ist, der im Aufspannkörper befestigt ist, den Formschieber durch eine entsprechende Schrägausnehmung durchgreift und bis in eine Ausnehmung der zweiten Formplatte hineinragt. Der zur Befestigung des langen Schrägteils eingesetzte Aufspannkörper ist sehr voluminös und erstreckt sich quer zur Längsachse des Werkstücks in erheblichem Umfang. Die ihn aufnehmende Ausnehmung der ersten Formplatte erstreckt sich bis an deren Außenumfangsrand. Auch das Führungsteil für den Formschieber ist entsprechend voluminös. Die vorbeschriebenen voluminösen Ausnehmungen der Formplatten bringen die Gefahr von Verzugsspannungen mit sich. Außerdem ist der Formenbauer gezwungen, eine Vielzahl von maßgenauen Bearbeitungsvorgängen durchzuführen, um die erforderlichen Ausnehmungen in den Formplatten herzustellen. Die voluminösen Ausnehmungen haben auch den Nachteil, daß das Spritzwerkzeug nur mit einem oder wenigen Formschiebern dieser Art ausgerüstet werden kann.

Aus Patent Abstracts of Japan vol. 13 no. 67 (M-798) (3415),15. Februar 1989 & JP-A-63 270114 ist ein Spritzwerkzeug mit einem quer zur Längsachse des Werkzeugs verstellbaren Formschieber bekannt, der einer ersten Formplatte der einen Werkzeughälfte zugeordnet ist, und mit einem an dem Formschieber angreifenden Schrägteil, das an einem an einer zweiten Formplatte der anderen Werkzeughälfte befestigten Aufspannkörper vorhanden ist. Das Schrägteil umgreift einen Teil des Formschiebers und ist mit dem Aufspannkörper einstückig ausgebildet. Der Aufspannkörper ist so ausgebildet, daß eine Öffnung der Werkzeughälften nicht zu einer Verstellung des Formschiebers führt.

Demgegenüber liegt der Erfindung die Aufgabe zugrunde, ein Spritzwerkzeug mit den eingangs genannten Merkmalen so zu verbessern, daß es im Bereich der Betätigung der Formschieber quer zur Längsachse des Werkzeuges klein baut und so auch eine Mehrfachanordnung bei ungünstigen Platzverhältnissen erlaubt.

Diese Aufgabe wird dadurch gelöst, daß der Führungskörper und der Aufspannkörper von den ihnen zugeordneten Formplatten in der jeweiligen Plattenebene allseitig umschlossene Bauteile sind, und daß das in den Formschieber eingreifende Schrägteil mit dem Aufspannkörper einstückig ausgebildet ist.

Die vorbeschriebenen Merkmale bewirken, daß die Formplatten quer zur Längsachse des Werkzeugs nicht bis an ihren Außenumfang ausgenommen werden müssen. Dementsprechend verringert sich das quer zur Längsachse des Werkzeugs zu entfernende Volumen der Formplatten und damit die Gefahr von Verzugsspannungen in den Platten. Die Ausnehmungen für den Aufspannkörper und für den Führungskörper können radial so klein gehalten werden, wie das im Hinblick auf die an der Bewegung des Formschiebers beteiligten Bauteile vertretbar ist, z.B. wegen der Präzisionsführung des Formschiebers, dessen Verstellweg und der von dem Schrägteil aufzubringenden Kräfte. Insbesondere diese Kräfte sind nicht von einer mehrstückigen Befestigung des Schrägteils mit dem Aufspannkörper abhängig, weil beide einstückig ausgebildet sind. Da keine besondere Befestigung des Schrägteils mit dem Aufspannkörper erforderlich ist, reduziert sich außerdem auch der Platzbedarf und die Schieberkonstruktion kann in diesem Bereich generell platzsparend ausgebildet werden.

Bei dem bekannten Spritzwerkzeug ist das Schrägteil als kreiszylindrischer Stift ausgebildet, der in eine im Querschnitt schwach oval bzw. in Verstellrichtung des Formschiebers mit Spiel ausgebildete Ausnehmung eingreift. Infolge dieser Ausbildung ergibt sich im Grundsatz eine Linienberührung zwischen diesem Schrägteil und der Schrägbohrung. Daher können lediglich bauartbedingte schwache Kräfte übertragen werden, die zwar für eine Bewegung des Formschiebers ausreichen, die aber in der Regel nicht genügend groß sind bzw. sein können, um den Formschieber entgegen dem Spritzdruck in der Einschubstellung festzuhalten. Es ist daher bekannt, das Spritzwerkzeug bzw. seinen Aufspannkörper mit einem Zuhaltestück zu versehen, welches den Formschieber unter Ausnutzung des Spiels zum Schrägteil im allerletzten Teil der Schließbewegung der Formplatten beaufschlagt. Das Schrägteil bewegt den Formschieber also lediglich bis kurz vor seine endgültige Einrückstellung, dann kommt das Zuhaltestück zur Anlage am Formschieber und schiebt diesen in seine endgültige Einrückstellung und beaufschlagt ihn dort mit dem erforderlichen Zuhaltedruck. In dieser letzten Phase der Einrückbewegung des Formschiebers wird das Schrägteil aufgrund des Spiels der Schrägausnehmung entlastet. Das bekannte Druckstück ist ein separates Teil, welches mit dem Aufspannkörper durch Verschraubung befestigt wurde. Dementsprechend erhöht es das dafür erforderliche Bauvolumen. Um das Spritzwerkzeug im Sinne der oben genannten Aufgabenstellung auszugestalten, wird das Spritzwerkzeug so ausgebildet, daß es mit einem Zuhaltestück versehen ist, das durch Verstellen der zweiten Formplatte in flächige Anlage am Formschieber gebracht werden kann und ein einstückiger Bestandteil des Aufspannkörpers ist. Infolgedessen ist eine besondere Befestigung des Zuhaltestücks am Aufspannkörper nicht erforderlich und der Aufspannkörper kann entsprechend kleiner ausgestaltet werden. Insbesondere bei kleineren Formschieberkonstruktionen, bei denen also die Einrück- bzw. Zuhaltekraft begrenzt ist, kommen derartige Ausgestaltungen des Spritzwerkzeugs in Frage.

Die einstückige Ausgestaltung des Aufspannkörpers mit dem Zuhaltestück ist ein grundsätzlicher Vorteil. Besonders vorteilhaft ist es jedoch, das Spritzwerkzeug so auszubilden, daß das Schrägteil durch Verstellen der zweiten Formplatte in flächige Anlage am Formschieber gebracht werden kann. In diesem Fall erfüllt das Schrägteil nicht nur die Aufgabe, den Formschieber in die Nähe seiner Einrückstellung zu bringen, sondern der Formschieber gelangt unter Einwirkung des Schrägteils exakt in seine Einrückstellung und wird dabei auch mit der erforderlichen Zuhaltekraft beaufschlagt, was durch die flächige Anlage des Schrägteils am Formschieber erreicht wird. Die flächige Anlage des Schrägteils am Formschieber bewirkt eine Herabsetzung der Flächenpressung, so daß die spezifischen Belastungen des Schrägteils entsprechend verringert werden. Dieses kann im übrigen durch eine entsprechende Formgestaltung auch größere Zuhaltekräfte übertragen.

Eine besonders großflächige Anlage des Schrägteils am Formschieber wird dann erreicht, wenn das Spritzwerkzeug so ausgebildet wird, daß das Schrägteil formplattenparallel rechteckige Querschnitte aufweist. Das Schrägteil liegt völlig flach bzw. planeben am Formschieber an. Die rechteckigen Querschnitte können vorteilhaft sehr groß ausgestaltet werden, um die erforderlichen Schließ- bzw. Zuhaltekräfte auf den Formschieber zu übertragen.

Das Spritzwerkzeug wird weiterhin zweckmäßigerweise dahingehend ausgestaltet, daß das Schrägteil senkrecht zu den Formplatten und in Verstellrichtung des Formschiebers parallelogrammförmig ausgebildet ist. Es ergeben sich gleich ablaufende Schließ- und Öffnungsbewegungen, die in ihrer Größe bzw. Länge durch den Winkel bzw. die Neigung bestimmt werden, die das Schrägteil relativ zur Längsachse des Werkzeugs einnimmt.

Um vergleichsweise große Zuhaltekräfte mit dem Schrägteil auf den Formschieber übertragen zu können, ist das Spritzwerkzeug so ausgebildet, daß das Schrägteil mindestens ebenso breit ist, wie der Formschieber. Speziell in diesem Fall, oder wenn das Schrägteil den Formschieber quer vollständig durchsetzt, wird das Spritzwerkzeug so ausgebildet, daß das Schrägteil weniger tief in den Formschieber eingreift, als dieser hoch ist. Der Formschieber wird dann durch das Schrägteil nicht unterteilt, so daß keine besonderen Maßnahmen zum Zusammenhalt des Formschiebers getroffen werden müssen.

Es ist vorteilhaft, das Spritzwerkzeug so auszubilden, daß der Aufspannkörper und der Führungskörper in Bezug auf die Längsachse des Werkzeugs jeweils parallelzylindrisch ausgebildet sind. Der Aufspannkörper und der Führungskörper sind in diesem Fall besonders schlank und können insbesondere dann, auch mehrfach, im Spritzwerkzeug eingesetzt werden, wenn die Platzverhältnisse quer zur Längsachse des Werkstücks beengt sind.

Herstellungstechnisch ist es vorteilhaft, das Spritzwerkzeug so auszubilden, daß der Aufspannkörper und der Führungskörper in kreiszylindrischen Bohrungen der Formplatten angeordnet und befestigt sind. Der Aufspannkörper und der Führungskörper können aus kreiszylindrischen Stangen bzw. aus bereits bestehenden kreiszylindrischen Führungselementen für Spritzwerkzeuge ausgestaltet werden und die Bohrungen der Formplatten sind massenfertigungsgerecht paßgenau herzustellen. Die Befestigung kann in herkömmlicher Weise zuverlässig ausgestaltet werden.

Eine spezielle Anordnung und Befestigung des Aufspannkörpers und des Führungskörpers können durch eine Ausbildung des Spritzwerkzeugs erreicht werden, bei der der Aufspannkörper und der Führungskörper in Sackbohrungen der Formplatten angeordnet und jeweils mit einer koaxialen Befestigungsschraube an der zugehörigen Formplatte befestigt sind.

Es läßt sich nicht ausschließen, daß im Laufe der Betriebszeit eines Spritzwerkzeugs Verschleißerscheinungen an den Eingriffsflächen des Schrägteils und des Formschiebers auftreten. Dadurch wird die präzise Stellung des letzteren beim Spritzen beeinträchtigt, was zu Ungenauigkeiten am Spritzling führen kann. Um dem zu begegnen, wird das Spritzwerkzeug so ausgebildet, daß der Aufspannkörper unter Zwischenschaltung einer Ausgleichsscheibe oder mehrerer Ausgleichsscheiben an der zugehörigen Formplatte befestigt ist. Die Ausgleichsscheibe bzw. mehrere Ausgleichsscheiben können unterschiedlich bemaßt werden, wodurch der Aufspannkörper entsprechend unterschiedlich positioniert wird. Eine etwas dickere Ausgleichsscheibe führt zu einer etwas höheren Anordnung des Aufspannkörpers, was zur genauen Justierung des Aufspannkörpers bzw. des Formschiebers ausgenutzt werden kann, insbesondere wenn Verschleiß vorliegt, infolgedessen der Formschieber nicht mehr weit genug verschoben werden kann.

Eine einfache und präzise Führung des Formschiebers kann dadurch erreicht werden, daß der Führungskörper einen quer angeordneten T-förmigen Schieberführungsschlitz hat, in dem der entsprechend T-förmige Formschieber geführt ist. Es ergibt sich eine in allen Achsrichtungen zuverlässige Führung des Formschiebers.

Eine Ausgestaltung des Spritzgießwerkzeuges liegt vor, wenn der Führungskörper in seinem der zweiten Formplatte zugewendeten Bereich neben dem Schieberführungsschlitz und unterhalb der Führungsabschnitte des T-förmigen Dachschenkels eine kegelstumpfförmige Zentrierausnehmung hat, in die das Schrägteil bei geschlossenem Werkzeug mit entsprechend kegelstumpfförmigen Zentrierkanten eingreift. Von wesentlichem Vorteil ist, daß der Aufspannkörper bzw. sein Schrägteil einerseits und der Führungskörper bzw. die beim ihm ausgebildete Zentrierausnehmung zu einer relativen Zentrierung der Formplatten beitragen können. Sie können im Einzelfall separate Zentriermittel überflüssig machen. Die Zentriermittel des Führungskörpers und des Aufspannkörpers sind unterhalb der Führungsabschnitte des T-förmigen Dachschenkels angeordnet, so daß sie die Führung des Formschiebers nicht stören. Herstellungstechnisch ist es besonders vorteilhaft, daß Führungselemente mit kegelstumpfförmigen Zentrierausnehmungen und mit kegelstumpfförmigen Zentriervorsprüngen bei Spritzwerkzeugen bereits eingesetzt werden. Diese Elemente können herangezogen werden, um den Führungskörper und den Aufspannkörper gemäß der hier vorliegenden Erfindung auszubilden. Dazu wird ein Führungselement, welches eine kegelstumpfförmige Zentrierausnehmung hat, mit dem T-förmigen Schieberführungsschlitz versehen, und ein Zentrierelement, welches einen kegelstumpfförmigen Vorsprung hat, wird mit dem Schrägteil ausgerüstet, indem der kegelstumpfförmige Vorsprung entsprechend abgearbeitet wird. Die Bearbeitung der bekannten Zentrierelemente erfolgt beispielsweise durch Draht- oder Senkerosion, so daß die erforderlichen Genauigkeiten erreicht werden, welche die Zentrierelemente im übrigen ohnehin bereits aufweisen.

In weiterer Ausgestaltung des Spritzwerkzeugs ist vorgesehen, daß der Führungskörper eine Kugelraste hat, die eine ungewollte Verschiebung des Formschiebers bei geöffnetem Werkzeug blockiert. Bei Bewegungen des Spritzwerkzeugs während des Gebrauchs bei geöffneten Werkzeughälften ist es daher unmöglich, daß sich der Formschieber ungewollt verstellt, so daß das Schrägteil beim Schließen der Werkzeughälften nicht in die Ausnehmung des Formschiebers eingreifen könnte. Besonders vorteilhaft ist das Spritzwerkzeug dann ausgebildet, wenn die Kugelraste koaxial mit einer Bohrung für die Befestigungsschraube des Führungskörpers angeordnet ist. Die im Führungskörper erforderlichen Bohrungen können massenfertigungsgerecht durch Stufenbohrung bzw. -Gewindeschnitt hergestellt werden.

Um den Formschieber formseitig an unterschiedliche Bedingungen anpassen zu können, beispielsweise bezüglich seiner wärmemäßigen Beaufschlagung oder bezüglich der Befestigung des Kerns, wird das Spritzwerkzeug so ausgestaltet, daß der Formschieber formseitig mit einem einen Kern tragenden Vorsatzstück versehen ist, das quer am Formschieber verschraubt ist. Die Befestigung des Vorsatzstücks quer am Formschieber bewirkt eine entsprechende Stabilität und es ist nicht erforderlich, den Formschieber längs zu durchbohren und dadurch im Bereich des Schrägteils zu schwächen.

Die Erfindung wird anhand einer in der Zeichnung dargestellten Ausführungsform erläutert. Es zeigt:
- Fig.1: ein geschlossenes Spritzwerkzeug,
- Fig.2: ein geöffnetes Spritzwerkzeug,
- Fig.3: eine vergrößerte Darstellung der Fig.1 im Bereich des Formschiebers des Spritzwerkzeugs, und
- Fig.4: eine Darstellung des Aufspannkörpers, des Form schiebers und des Führungskörpers in vertikal korrekter Zuordnung und in teilweise geschnittener Darstellung in einer zur Darstellungsebene der Fig.3 senkrechten Ebene.

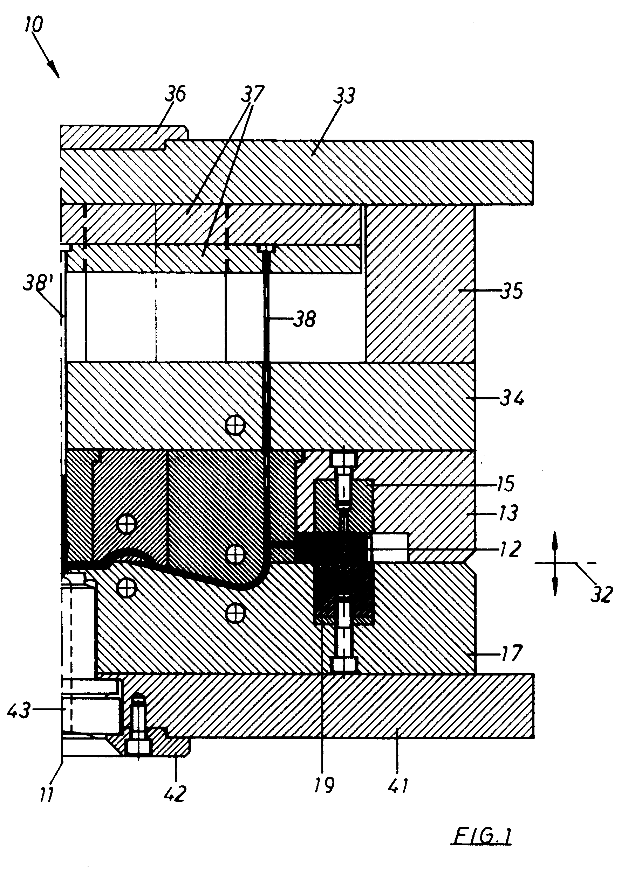

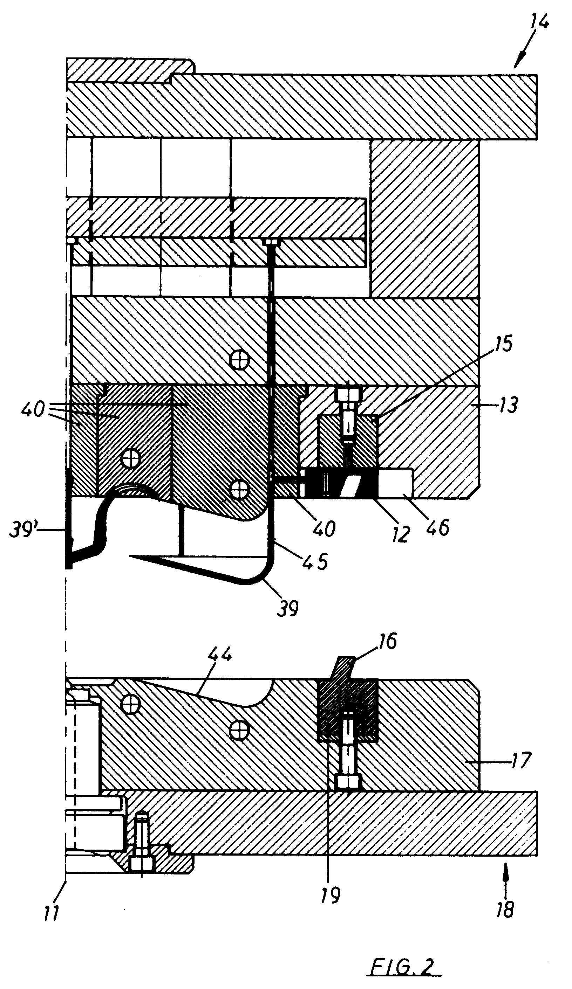

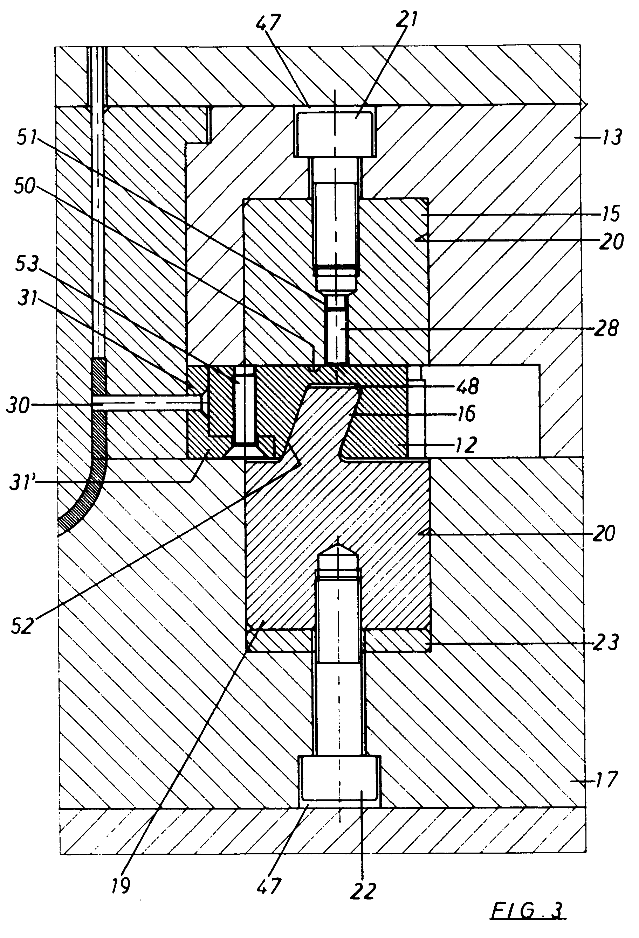

Das in Fig.1 dargestellte Spritzwerkzeug 10 hat eine Trennebene 32, so daß die beiden Werkzeughälften 14,18 aus der in Fig.1 dargestellten geschlossenen Stellung des Spritzwerkzeugs in die in Fig.2 dargestellte Offenstellung des Spritzwerkzeuges 10 gelangen können. Die Werkzeughälfte 14 hat eine Aufspannplatte 33, an der weitere Bauteile befestigt sind, nämlich eine Zwischenplatte 34 über zwei Abstandsleisten 35 und ein Zentrierring 36. Zwischen der Aufspannplatte 33 und der Zwischenplatte 34 sind zwei Auswerferplatten 37 vorhanden, welche Auswerferstifte 38,38' betätigt, um Spritzlinge 39 bzw. deren Angüsse 39' auszuwerfen. Es werden die Auswerferplatten 37 aus der in Fig.1 dargestellten Stellung in die in die Fig.2 dargestellte Stellung bewegt, so daß die Auswerferstifte 38,38' durch die Zwischenplatte 34 hindurch vorgeschoben werden und Spritzlinge 39 und Angüsse 39' von den Formkernen 40 trennen.

Die Formkerne 40 sind in einer weiteren, speziell als erste Formplatte 13 bezeichneten Platte angeordnet und in nicht dargestellter Weise an dieser und miteinander befestigt.

Eine der ersten Formplatte 13 gegenüberliegende zweite Formplatte 17 ist an einer Aufspannplatte 41 der zweiten Werkzeughälfte 18 befestigt, die ihrerseits mit einem Düsenzentrierring 42 versehen ist, die eine Angußbüchse 43 in einer von der ersten Formplatte 17 und der Aufspannplatte 41 gebildeten Ausnehmung hält, wobei die Angußbüchse 43 dazu dient, den zu spritzenden Werkstoff aus einer nicht dargestellten, durch den Zentrierring 42 zentrierten Spritzdüse eines Werkstoffvorrats in die Spritzbereiche der Form zu leiten. Fig.2 zeigt, daß der Spritzling 39 unten durch eine Formausnehmung 44 der Formplatte 17 begrenzt und damit geformt wird.

Eine Besonderheit des Spritzlings 39 besteht darin, daß er in seinem Rand ein Loch 45 aufweist. Um dieses Loch 45 herzustellen, ist ein Kern 30 vorgesehen, der vor dem Spritzen an der Stelle des Lochs 45 angeordnet wird. Der Kern 30 wird umspritzt, so daß sich nach seinem Entfernen das gewünschte Loch 45 ergibt. Um den Kern 30 zu entfernen, ist ein Formschieber 12 vorgesehen, der quer zur Längsachse 11 des Werkzeugs 10 beweglich ist, wozu in der Formplatte 13 ein angemessener Bewegungsspielraum 46 vorhanden ist.

Um den Formschieber 12 quer zur Längsachse 11 bewegen zu können, sind ein Aufspannkörper 19 und ein Führungskörper 15 vorhanden. Beide sind im wesentlichen Kreiszylinder, die in kreiszylindrische Bohrungen 20 der Formplatten 13,17 eingebaut sind. Diese Bohrungen 20 sind Sackbohrungen, in denen die Bauteile 15,19 mit Befestigungsschrauben 21,22 gegen Herausfallen befestigt werden können, wobei die Köpfe der Befestigungsschrauben 21,22 vollständig von entsprechend tiefen Ausnehmungen 47 der Formplatten 13,17 aufgenommen werden, an denen sich die Schraubenköpfe so abstützen, daß sie fest gegen den Boden der Sackbohrungen 20 gezogen sind. Es ist möglich, sie nötigenfalls in üblicher Weise gegen Verdrehen zu sichern, indem beispielsweise entsprechende Führungsrippen und Führungsrillen in die Bauteile 15,19 bzw. in die Formplatten 13,17 so eingearbeitet werden, daß sie einem Verdrehen entgegenwirken.

Der Führungskörper 15 hat einen als Schieberführungsschlitz 24 für den Formschieber 12 ausgebildeten Querschlitz, der mit der Bewegungsausnehmung 46 der Formplatten 13 für den Formschieber 12 gleichachsig liegt. Zumindest der Schieberführungsschlitz 24 ist gemäß Fig.4 T-förmig ausgebildet. In die infolgedessen vorhandenen Führungsabschnitte 25 des T-förmigen Dachschenkels greift der Formschieber 12 mit seinen T-Vorsprüngen 12' ein und ist auf diese Weise mit dem Führungskörper 15 dahingehend zusammengebaut, daß er beim Öffnen des Spritzwerkzeugs 10 nicht aus dem Führungskörper 15 herausfallen kann. Er gelangt infolgedessen beim Öffnen des Werkzeugs 10 in die in Fig.2 oben dargestellte Stellung, in der sein Kern 30 nicht in den Spritzbereich des Spritzlings eingreift.

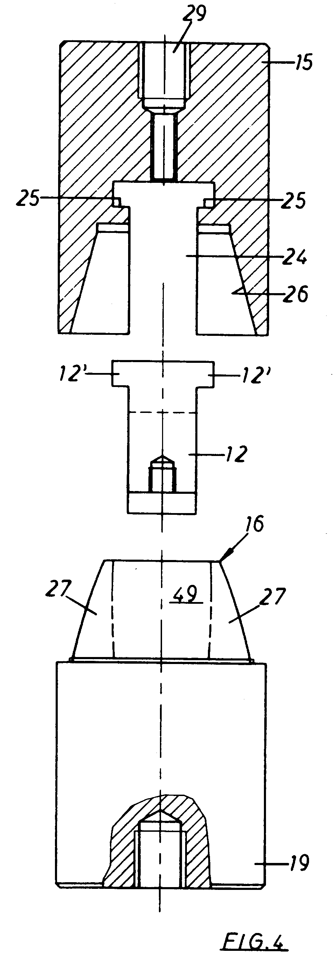

Um die in Fig.2 oben dargestellte Stellung des Formschiebers 12 zu erreichen, ist der Aufspannkörper 19 mit einem Schrägteil 16 versehen, und zwar einstückig ausgebildet. Das Schrägteil 16 greift in eine entsprechend schräg ausgebildete Ausnehmung 48 des Formschiebers 12, wenn das Werkzeug 10 gemäß Fig.1,3 geschlossen ist. Werden die Formhälften 14,18 in der Richtung der Längsachse 11 auseinandergefahren, so bewegt das Schrägteil 16 den Formschieber 12 in der Darstellungsebene der Fig.3 nach rechts und zieht damit den Kern 30 aus dem Spritzling 39 heraus. Erst danach werden die Auswerferplatten 37 betätigt.

Das Schrägteil 16 ist in besonderer Weise auf die Anforderungen beim Betätigen des Formschiebers 12 und beim Spritzen abgestimmt. Zum einen ist eine planebene Vorderfläche 49 vorhanden die sich an einer entsprechend planebenen Abstützfläche 52 des Formschiebers 12 abzustützen vermag. Die Pressung zwischen beiden Flächen ist entsprechend gering. Die Belastung des Schrägteils 16 erstreckt sich infolgedessen auf alle Querschnittsbereiche des Schrägteils 16 in gleichmäßiger Weise. Es können vergleichsweise große Kräfte mit geringen Querschnitten übertragen werden. Andererseits ist das Schrägteil 16 in Querschnitten parallel zur Darstellungsebene parallelogrammförmig ausgebildet, so daß sich die Vorschub- und Rückzugbewegungen des Formschiebers 12 gleich schnell und vor allen Dingen gleichmäßig abwickeln, wobei die Neigung des Schrägteils 16 gegen die Längsachse 11 die Bewegungsweite des Formschiebers 12 bestimmt. Querschnitte durch das Schrägteil 16 senkrecht zur Längsachse 11 bzw. formplattenparallel ergeben ein rechteckiges Format, falls die in Fig.3 nicht dargestellten Kanten entsprechend ausgebildet sind.

Gemäß Fig.4 ist das Schrägteil 16 etwas breiter, als der Formschieber 12. Letzter wird also vom Schrägteil 16 quer durchsetzt. Aus diesem Grund kann die Eingriffslänge des Schrägteils 16 in den Formschieber 12 nicht dessen gesamter Höhe entsprechen, weil der Formschieber 12 sonst quer durchteilt würde. Das Schrägteil müßte schmaler als der Formschieber 12 sein, um diesen nach oben durchsetzen zu können, was den Vorteil größerer Verstellung des Formschiebers 12 haben könnte, aber bei radial begrenzten Abmessungen in unerwünschter Weise kleine Querschnitte des Schrägteils 16 nach sich zöge, so daß die erforderlichen Haltekräfte für den Formschieber 12 häufig nicht aufgebracht werden können.

Damit der Formschieber 12 nicht längs durchbohrt werden muß, wenn der Kern 30 am Formschieber 12 befestigt werden soll, hat der Formschieber 12 ein Vorsatzstück 31, nämlich eine Stirnplatte mit einer Bodenplatte 31', die mit der Unterseite des Formschiebers 12 bündig liegt und in eine stirnseitige Ausnehmung des Formschiebers 12 eingesetzt ist. Durch die Platte 31' hindurch ist das Vorsatzstück 31 mit dem Formschieber 12 durch eine Befestigungsschraube 53 fest verbunden. Der Kern 30 wird durch eine Ausnehmung des plattenförmigen Bereichs des Vorsatzstücks 31 gesteckt und zwischen diesem und dem Formschieber 12 derart eingeklemmt, daß der Kern 30 genau positionierbar und bewegbar ist.

Die präzise Position des Formschiebers 12 zum Spritzling 39 bzw. zum Führungsstück 15 in Bezug auf die Verstellrichtung des Formschiebers 12 wird durch eine Rastausnehmung 50 festgelegt, in die eine Kugelraste 28 eingreifen kann. Die in Fig.3 dargestellte Position des Formschiebers 12 ist die eine der Grenzstellungen, während die andere Grenzstellung, nämlich die Öffnungsstellung des Formschiebers 12, durch die spritzlingseitige Kugelrastausnehmung 50 definiert ist. Die Kugelraste 28 ist in eine Gewindebohrung 51 eingeschraubt, die gleichachsig mit der Gewindebohrung 29 für die Befestigungsschraube 21 des Führungskörpers 15 liegt. Die Kugelraste 28 besteht im wesentlichen aus einer mit dem Außengewinde zum Einschrauben in das Gewinde 51 versehenen Hülse, in deren Inneren eine federbeaufschlagte Kugel angeordnet ist, deren Durchmesser der Rastausnehmung 50 angepaßt ist.

Aus Fig.4 ist ersichtlich, daß die Seitenkanten des Schrägteils 16 ballig ausgebildet sind. Das resultiert daher, daß der Aufspannkörper 19 aus einem rotationssymmetrischen Zentrierelement hergestellt ist, das aus einem kreiszylindrischen Längenabschnitt und einem daran anschließenden ballig kegelstumpfförmigen Zentrierabschnitt hergestellt wurde, aus dem die Querschnittsform des Schrägteils 16 gemäß Fig.3 durch Drahtschneiden entstanden ist. Dementsprechend sind die Längskanten des Schrägteils 16 auf einer Kegelstumpffläche liegende Zentrierkanten 27. Der Führungskörper 15 wurde aus einem rotationssymmetrischen zylindrischen Zentrierelement hergestellt, der eine kegelstumpfförmige Zentrierausnehmung 26 hat, um mit dem vorbeschriebenen Zentrierelement zusammenzuwirken. Um aus einem solchen Zentrierelement den Führungskörper 15 herzustellen, ist es im wesentlichen lediglich erforderlich, den Schieberführungsschlitz 24 einzuarbeiten, z.B. durch Drahtschneiden oder Fräsen. Die danach verbliebenen Flächen der Ausnehmung 26 liegen auf einer Kegelstumpffläche. Werden die Formhälften 14,18 zusammengeschoben, so greift das Schrägteil 16 des Aufspannkörpers 19 in die Ausnehmung 48 des Formschiebers 12 und zugleich bewegen sich die Zentrierkanten 27 in die Zentrierausnehmung 26 hinein und sorgen gegen Ende der Schließbewegung der Werkzeughälften 14,18 für eine Zentrierung dieser Hälften.

## Patentansprüche

1. Spritzwerkzeug (10), mit einem quer zur Längsachse (11) des Werkzeugs (10) verstellbaren Formschieber (12), der von einem an einer ersten Formplatte (13) der einen Werkzeughälfte (14) festgelegten Führungskörper (15) geführt ist, und mit einem in den Formschieber (12) eingreifenden Schrägteil (16), das an einem an einer zweiten Formplatte (17) der anderen Werkzeughälfte (18) befestigten Aufspannkörper (19) vorhanden ist, **dadurch gekennzeichnet**, daß der Führungskörper (15) und der Aufspannkörper (19) von den ihnen zugeordneten Formplatten (13,17) in der jeweiligen Plattenebene allseitig umschlossene Bauteile sind, und daß das in den Formschieber (12) eingreifende Schrägteil (16) mit dem Aufspannkörper (19) einstückig ausgebildet ist.

2. Spritzwerkzeug nach Anspruch 1, **dadurch gekennzeichnet**, daß es mit einem Zuhaltestück versehen ist, das durch Verstellen der zweiten Formplatte (17) in flächige Anlage am Formschieber (12) gebracht werden kann und ein einstückiger Bestandteil des Aufspannkörpers (19) ist.

3. Spritzwerkzeug nach Anspruch 1 oder 2, **dadurch gekennzeichnet**, daß das Schrägteil (16) durch Verstellen der zweiten Formplatte (17) in flächige Anlage am Formschieber (12) gebracht werden kann.

4. Spritzwerkzeug nach einem der Ansprüche 1 bis 3, **dadurch gekennzeichnet**, daß das Schrägteil (16) formplattenparallel rechteckige Querschnitte aufweist.

5. Spritzwerkzeug nach einem der Ansprüche 1 bis 4**, dadurch gekennzeichnet**, daß das Schrägteil (16) senkrecht zu den Formplatten (13,17) und in Verstellrichtung des Formschiebers (12) parallelogrammförmig ausgebildet ist.

6. Spritzwerkzeug nach einem der Ansprüche 1 bis 5, **dadurch gekennzeichnet**, daß das Schrägteil (16) mindestens ebenso breit ist, wie der Formschieber (12).

7. Spritzwerkzeug nach einem der Ansprüche 1 bis 6, **dadurch gekennzeichnet**, daß das Schrägteil (16) weniger tief in den Formschieber (12) eingreift, als dieser hoch ist.

8. Spritzwerkzeug nach einem der Ansprüche 1 bis 7, **dadurch gekennzeichnet,** daß der Aufspannkörper (19) und der Führungskörper (15) in Bezug auf die Längsachse (11) des Werkzeugs (10) jeweils parallelzylindrisch ausgebildet sind.

9. Spritzwerkzeug nach einem der Ansprüche 1 bis 8, **dadurch gekennzeichnet**, daß der Aufspannkörper (19) und der Führungskörper (15) in kreiszylindrischen Bohrungen (20) der Formplatten (13, 17) angeordnet und befestigt sind.

10. Spritzwerkzeug nach einem der Ansprüche 1 bis 9, **dadurch gekennzeichnet**, daß der Aufspannkörper (19) und der Führungskörper (15) in Sackbohrungen der Formplatten (13,17) angeordnet und jeweils mit einer koaxialen Befestigungsschraube (21,22) an der zugehörigen Formplatte (13,17) befestigt sind.

11. Spritzwerkzeug nach einem der Ansprüche 1 bis 10, **dadurch gekennzeichnet**, daß der Aufspannkörper (19) unter Zwischenschaltung einer Ausgleichsscheibe (23) oder mehrerer Ausgleichsscheiben an der zugehörigen Formplatte (17) befestigt ist.

12. Spritzwerkzeug nach einem der Ansprüche 1 bis 11, **dadurch gekennzeichnet**, daß der Führungskörper (15) einen quer angeordneten T-förmigen Schieberführungsschlitz (24) hat, in dem der entsprechend T-förmige Formschieber (12) geführt ist.

13. Spritzwerkzeug nach einem der Ansprüche 1 bis 12, **dadurch gekennzeichnet**, daß der Führungskörper (15) in seinem der zweiten Formplatte (17) zugewendeten Bereich neben dem Schieberführungsschlitz (24) und unterhalb der Führungsabschnitte (25) des T-förmigen Dachschenkels eine kegelstumpfförmige Zentrierausnehmung (26) hat, in die das Schrägteil (16) bei geschlossenem Werkzeug (10) mit entsprechend kegelstumpfförmigen Zentrierkanten (27) eingreift.

14. Spritzwerkzeug nach einem der Ansprüche 1 bis 13, **dadurch gekennzeichnet**, daß der Führungskörper (15) eine Kugelraste (28) hat, die eine ungewollte Verschiebung des Formschiebers (12) bei geöffnetem Werkzeug (10) blockiert.

15. Spritzwerkzeug nach Anspruch 14, **dadurch gekennzeichnet**, daß die Kugelraste (28) koaxial mit einer Bohrung (29) für die Befestigungsschraube (21) des Führungskörpers (15) angeordnet ist.

16. Spritzwerkzeug nach einem der Ansprüche 1 bis 15, **dadurch gekennzeichnet**, daß der Formschieber (12) formseitig mit einem einen Kern (30) tragenden Vorsatzstück (31) versehen ist, das quer am Formschieber (12) verschraubt ist.

## Claims

1. Injection tool (10), having a mould side (12) which can be displaced transverse to the longitudinal axis (11) of the tool (10), which slide is guided by a guide body (15) fixed on a first mould plate (13) of one half (14) of the tool, and having an inclined part (16) engaging in the mould slide (12) and provided on a clamping body (19) attached to a second mould plate (17) of the other half (18) of the tool, characterised in that the guide body (15) and the clamping body (19) are components enclosed on all sides at the respective plate level by the mould parts (13, 17) allocated to them, and that the inclined part (16) engaging in the mould slide (12) is formed as one piece with the clamping body (19).

2. Injection tool according to claim 1, characterised in that it is provided with a holding piece which, by the displacement of the second mould plate (17), can be brought into surface contact with the mould slide (12) and is an integral component of the clamping body (19).

3. Injection tool according to claim 1 or 2, characterised in that the inclined part (16) can be brought into surface contact with the mould slide (12) by displacement of the second mould plate (17).

4. Injection tool according to one of claims 1 to 3, characterised in that the inclined pan (16) comprises a rectangular cross-section parallel to the mould plate.

5. Injection tool according to one of claims 1 to 4, characterised in that the inclined part (16) is formed perpendicular to the mould plates (13, 17) and as a parallelogram in the direction of displacement of the mould slide (12).

6. Injection tool according to one of claims 1 to 5, characterised in that the inclined part (16) is at least as wide as the mould slide (12).

7. Injection tool according to one of claims 1 to 6, characterised in that the inclined part (16) engages in the mould slide (12) to a depth less than the height of the mould slide.

8. Injection tool according to one of claims 1 to 7, characterised in that the clamping body (19) and the guide body (15) are each formed in a parallel cylindrical manner with respect to the longitudinal axis (11) of the tool (10).

9. Injection tool according to one of claims 1 to 8, characterised in that the clamping body (19) and the guide body (15) are displaced and fixed in circular-cylindrical bores (20) in the mould plates (13, 17).

10. Injection tool according to one of claims 1 to 9, characterised in that the clamping body (19) and the guide body (15) are disposed in blind bores in the mould plates (13, 17) and are respectively attached by a coaxial fixing screw (21, 22) to the associated mould plate (13, 17).

11. Injection tool according to one of claims 1 to 10, characterised in that the clamping body (19) is attached to the associated mould plate (17) with a compensating disc (23) or a plurality of compensating discs being interposed.

12. Injection tool according to one of claims 1 to 11, characterised in that the guide body (15) has a transversely-disposed T-shaped slide guiding slit (24) in which the corresponding T-shaped mould slide (12) is guided.

13. Injection tool according to one of claims 1 to 12, characterised in that the guide body (15), in its region facing the second mould plate (17) in addition to the slide guiding slit (24) and below the guide portions (25) of the T-shaped roof-like limb, has a frustum-shaped centring recess (26) into which the inclined part (16) engages with corresponding frustum-shaped centring edges (27) when the tool (10) is closed.

14. Injection tool according to one of claims 1 to 13, characterised in that the guide body (15) has a ball catch (28) which blocks undesired movement of the mould slide (12) when the tool (10) is open.

15. Injection tool according to claim 14, characterised in that the ball catch (28) is disposed coaxially to a bore (29) for the fixing screw (21) of the guide body (15).

16. Injection tool according to one of claims 1 to 15, characterised in that the mould slide (12) is provided, on the mould side, with an attachment piece (31) supporting a core (30) and being screwed to the mould slide (12) in transverse manner.

## Revendications

1. Moule à injection (10) comportant une coulisse de moule (12) qui est réglable transversalement par rapport à l'axe longitudinal (11) du moule (10) et qui est guidée par un corps de guidage (15) fixé à une première plaque de moulage (13) d'une moitié de moule (14), et une partie inclinée (16) qui pénètre dans la coulisse de moule (12) et qui est prévue sur un corps de serrage (19) fixé à une seconde plaque de moulage (17) de l'autre moitié de moule (18), **caractérisé** en ce que le corps de guidage (15) et le corps de serrage (19) sont des éléments de construction entourés de tous les côtés par les plaques de moulage (13, 17) qui leur sont associées, dans le plan de ces plaques, et en ce que la partie inclinée (16) qui pénètre dans la coulisse de moule (12) est réalisée d'une seule pièce avec le corps de serrage (19).

2. Moule à injection selon la revendication 1, **caractérisé** en ce qu'il est pourvu d'une pièce de fermeture qui peut être appliquée à plat sur la coulisse de moule (12) grâce au réglage de la seconde plaque de moulage (17), et qui fait partie du corps de serrage (19).

3. Moule à injection selon la revendication 1 ou 2, **caractérisé** en ce que la partie inclinée (16) peut être appliquée à plat sur la coulisse de moule (12) grâce au réglage de la seconde plaque de moulage (17).

4. Moule à injection selon l'une des revendications 1 à 3, **caractérisé** en ce que la partie inclinée (16) présente des sections transversales rectangulaires parallèles aux plaques de moulage.

5. Moule à injection selon l'une des revendications 1 à 4, **caractérisé** en ce que la partie inclinée (16) a la forme d'un parallélogramme perpendiculairement aux plaques de moulage (13, 17) et dans le sens de réglage de la coulisse de moule (12).

6. Moule à injection selon l'une des revendications 1 à 5, **caractérisé** en ce que la partie inclinée (16) est au moins aussi large que la coulisse de moule (12).

7. Moule à injection selon l'une des revendications 1 à 6, **caractérisé** en ce que la partie inclinée (16) pénètre dans la coulisse de moule (12) sur une profondeur inférieure à la hauteur de celle-ci.

8. Moule à injection selon l'une des revendications 1 à 7, **caractérisé** en ce que le corps de serrage (19) et le corps de guidage (15) ont une forme cylindrique parallèle par rapport à l'axe longitudinal (11) du moule (10).

9. Moule à injection selon l'une des revendications 1 à 8, **caractérisé** en ce que le corps de serrage (19) et le corps de guidage (15) sont disposés et fixés dans des perçages cylindriques ronds (20) des plaques de moulage (13, 17).

10. Moule à injection selon l'une des revendications 1 à 9, **caractérisé** en ce que le corps de serrage (19) et le corps de guidage (15) sont disposés dans des perçages borgnes des plaques de moulage (13, 17) et sont fixés à la plaque de moulage associée (13, 17) à l'aide de vis de fixation coaxiales respectives (21, 22).

11. Moule à injection selon l'une des revendications 1 à 10, **caractérisé** en ce qu'on fixe le corps de serrage (19) à la plaque de moulage associée (17) en intercalant une rondelle d'ajustage (23) ou plusieurs rondelles d'ajustage.

12. Moule à injection selon l'une des revendications 1 à 11, **caractérisé** en ce que le corps de guidage (15) a une fente de guidage de coulisse en T (24) disposée transversalement, dans laquelle est guidée la coulisse de moule (12) de forme en T correspondante.

13. Moule à injection selon l'une des revendications 1 à 12, **caractérisé** en ce que le corps de guidage (15) présente, dans sa zone tournée vers la seconde plaque de moulage (17), près de la fente de guidage de coulisse (24) et au-dessous des sections de guidage (25) de la branche du T, un creux de centrage tronconique (26) dans lequel la partie inclinée (16) pénètre avec des bords de centrage (27) de forme tronconique correspondante, lorsque le moule (10) est fermé.

14. Moule à injection selon l'une des revendications 1 à 13, **caractérisé** en ce que le corps de guidage (15) a un cran à billes (28) qui bloque un déplacement involontaire de la coulisse de moule (12) lorsque le moule (10) est ouvert.

15. Moule à injection selon la revendication 14, **caractérisé** en ce que le cran à billes (28) est coaxial par rapport à un perçage (29) prévu pour la vis de fixation (21) du corps de guidage (15).

16. Moule à injection selon l'une des revendications 1 à 15, **caractérisé** en ce que la coulisse de moule (12) est pourvue, côté moule, d'une pièce adaptable (31) qui porte un noyau (30) et qui est vissée transversalement sur la coulisse de moule (12).
